(19) Europäisches Patentamt
European Patent Office
Office européen des brevets

(11) EP 2 708 574 A1

(12) EUROPEAN PATENT APPLICATION

(43) Date of publication:
**19.03.2014 Bulletin 2014/12**

(51) Int Cl.:
***C08K 5/20*** *(2006.01)* ***C08K 5/3435*** *(2006.01)*

(21) Application number: **12006550.3**

(22) Date of filing: **18.09.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicants:
- **Clariant International Ltd.**
  **4132 Muttenz (CH)**
- **Clariant Masterbatches (Italia) S.p.A.**
  **20010 Pogliano Milanese (IT)**

(72) Inventors:
- **Fava, Flavio**
  **20015 Parabiago (MI) (IT)**
- **Marson, Angelica**
  **4053 Basel (CH)**
- **Steffanut, Pascal**
  **68128 Village-Neuf (FR)**
- **Johann, Laure**
  **68510 Sierentz (FR)**

(74) Representative: **Hütter, Klaus et al**
**Clariant Produkte (Deutschland) GmbH**
**Patent Management**
**Industriepark Höchst, G 860**
**65926 Frankfurt am Main (DE)**

# (54) Oxygen scavenging plastic material

(57) The invention relates to the use of an additive as oxygen scavenger in a plastic material, wherein
(a) the plastic material is a polyester, a polyolefin, a polyolefin copolymer or a polystyrene, and
the additive (b) is a light stabilizer and optionally a transition metal compound.

EP 2 708 574 A1

## Description

The present invention relates to oxygen barrier plastic materials comprising an organic polymer and an oxygen scavenger to enhance the quality and shelf-life of oxygen-sensitive products in packaging applications. These oxygen barrier plastic materials can be processed into mono- and multilayer rigid containers or flexible films to impart oxygen barrier properties at an enhanced clarity compared to other oxygen barrier compositions known in the art.
Furthermore, the present invention relates to the use of oxygen barrier compositions in food, beverage and pharmaceutical packaging and to plastic material and articles comprising said oxygen barrier compositions.
For the purposes of the invention, masterbatches (MB) are compositions comprising a polymeric carrier or a liquid vehicle and an additive, where the additive is present in the masterbatch in higher concentrations than in the final application or in the final article, and the carrier does not have to be the organic polymer of the final application or of the final article. Preferred concentrations of the additives in a masterbatch range preferably of from 0.5 to 90 % by weight, more preferably of from 1 to 80 % by weight, the % by weight based in each case on the total weight of the masterbatch.
For the purposes of the invention, compounds (CO) are compositions comprising an organic polymer and an additive, where the additive is present in the compound in the desired concentration for the final application or for the final article, and the organic polymer is the organic polymer of the final application or of the final article, so that the compound is merely brought to the desired shape of the final application or of the final article by means of a physical shaping process.
Packaging for personal care, medical, pharmaceutical, household, industrial, food and beverage products require high barrier properties to oxygen to preserve the freshness and quality of the package contents. Containers made of traditional materials like glass or metal provide an excellent barrier both to egress of substances from the container and to ingress of substances from the environment. In most instances, gas permeation through a glass or metal container is negligible. Nevertheless, due to the potentially lower cost and functional advantages (such as thermosealability, microwavability, optical properties, lightweight, decrease breakage and unlimited sizes and shapes) over materials such as glass and metal, there has been an increasing use of plastic materials in packaging in recent years. Polymeric material commonly used in packaging applications are polyethylene terephthalate resin (PET) and polyolefins. Both PET and polyolefins have a number of advantageous properties for use in packaging applications, but they do not possess the gas barrier properties that are required or desired in many oxygen sensitive applications.
A number of solutions to overcome barrier problems associated with plastic containers have been proposed.
The packaging industry has developed, for example, multilayer structures comprising mixed polymer layers. These laminated packaging containers offer improved barrier properties approaching, but not comparable to, those of glass and steel while sacrificing many of the recycling benefits associated with single layer containers such as PET, polyethylene naphthalate (PEN) or polyolefins bottles. Furthermore, depending on the mixtures of polymers, copolymers, blends used in the various layers, clarity of the container is often substantially diminished. Maintaining the proper balance of recyclability, barrier properties, and clarity is most critical in bottling applications.
The use of multilayer bottles that contain an inner, sometimes sandwiched, layer of a higher barrier polymer material compared to the outer polymer layers is commonplace. Typically the centre layer is a high barrier polymer that slows the permeability of oxygen through the container wall. Such a system would be categorized as a passive barrier. Examples of such high barrier polymers include ethylene-vinyl alcohol (EVOH) and polyamides, preferably a partially aromatic polyamide containing meta-xylylene groups, such as poly (m-xylylene adipamide), MXD6. A common construction for such multilayer structures would comprise inner and outer layers of PET with a centre layer of a polyamide, or inner and outer layers of polyolefins with a centre layer of ethylene-vinyl alcohol (EVOH) polymer.
One of the advantages of using polymers such as EVOH, instead of other materials imparting oxygen barrier properties such as thin metal foil or vapour-deposited layers of inorganic oxides, is that polymer processing techniques such as extrusion, injection molding, film blowing, are available. However, EVOH suffers from the drawback of being water sensitive and to maintain its oxygen barrier properties it is usually necessary to coat or laminate it with moisture-barrier materials such as polyolefins.
MXD6 has excellent gas-barrier property and better thermal stability during melting than the other gas-barrier resins. It can be co-extruded or co-injection-molded with a thermoplastic resin such as polyethylene terephthalate (PET) and polypropylene, and positive efforts have been made to utilize it as a gas-barrier layer of multilayer structures. Nevertheless, in multilayer containers produced by using nylon MXD6, thickness unevenness and whitening are often observed, and it is very difficult to obtain multilayer containers that are satisfactory in practical applications with regards to shape, gas-barrier property and transparency.
Also, designing multilayer structures of the type described above implies increased complexity of the manufacturing process. In particular, the individual layers of said multilayer structures have to be assembled in such a manner that problems like separation of the individual layers (delamination) during use of the article are prevented.
Blends of low gas permeable polymers, such as MXD6, directly into polyesters are also commercially viable solutions although corresponding monolayer articles are prompt to haze formation due to the incompatible MXD6 domains

in the PET matrix. Haziness has been particularly observed in biaxially oriented films and in stretched blown bottles. Incompatibility of PET and MXD6 results in large MXD6 particles that can effectively scatter light. Several approaches have been undertaken to reduce haze formation in PET/MXD6 blends. For example, the use of compatibilizers reduces particle size to the submicron level thus resulting in containers with greatly improved impact delamination resistance, adhesion, colour, and transparency.

US 6346307 discloses the use of a dianhydride of a tetracarboxylic acid to reduce the dispersed domain size of a blend of MXD6 in PET.

US 6444283 discloses that low molecular weight MXD6 polyamides have lower haze than higher molecular weight MXD6 when blended with PET.

US 4957 980 discloses the use of maleic anhydride grafted copolyesters to compatibilize polyester-MXD6 blends.

To further reduce the entry of oxygen into the contents of the package, small amounts of transition metal salts can be added to PET/polyamide blends to catalyse and actively promote the oxidation of the polyamide polymer, thereby further enhancing the oxygen barrier characteristics of the package. This method affords the opportunity to eliminate unwanted oxygen from the package cavity that may have been inadvertently introduced during packaging or filling. The method of providing oxygen barrier properties where a substance consumes or reacts with the oxygen is known as a reactive oxygen barrier and differs from the passive oxygen barriers which attempt to hermetically seal a product away from oxygen via the passive approach.

US 5021515A, US 5639815A and US 5955527A disclose the use of a cobalt salt as the preferred transition metal catalyst and MXD6 as the preferred polyamide. It is mentioned that the scavenging properties of the compositions do not emerge immediately after the blending, but only after ageing. There is no data on the haze of the polyamide blends.

EP1663630B1 discloses the use of 5-sodiumsulfoisophthalic acid or 5-zincsulfoisophthalic acid, or their dialkyl esters, as ionic compatibilizers of blends of polyester, partially aromatic polyamide and cobalt salts.

Apart from PET/polyamide blends and the catalysed oxidation of the polyamide polymer by a transition metal catalyst, incorporation into the container walls of other substances capable of intercepting and scavenging oxygen as it attempts to pass through the walls of the container is another method to limit oxygen exposure.

Among others, oxygen-scavenging compositions comprising an oxidizable ethylenically unsaturated hydrocarbon and a transition metal catalyst are well-known viable solutions. US 5310497A, US 5211875A, US 5346644A and US 5350622A disclose the use of poly(1,2-butadienes) as the ethylenically unsaturated hydrocarbons; US 5021515A and US 5211875A disclose the use of an oxidizable polymer such as polyamide, polyisoprene, polybutadiene, or copolymers thereof, specifically block copolymers thereof, such as styrene-butadiene.

Within the scope of the present invention, preferred compositions would comprise both a passive barrier and an active oxygen scavenger so to absorb oxygen at a rate faster than the permeability of oxygen through the packaging wall for the planned shelf-life of the packaged product while having enough capacity to remove oxygen from within the package headspace, if necessary. Additionally, shelf life and turnover intervals require that the oxygen scavenging should occur for extended periods of time.

Beyond pure performance and protection of the packaged product, appearance is also a key element to product differentiation. The trend towards transparent materials has become critical to the food packaging industry in recent years and continues to gain momentum. In those applications requiring clarity, and particularly for polyester applications, the packaging article should have optical properties approaching those of virgin polymer. Product visibility is a powerful tool, both functionally and aesthetically. It allows end consumers to readily see what product they are buying and check its appearance without opening the packaging and enables product manufacturers to easily inspect the packaged product through the use of vision systems, metal detectors and manual visual inspection.

As mentioned, in barrier layers of packaging articles that are made from blends of oxygen scavenging materials with resins such as PET, haze can result from the immiscibility of the scavenging materials with the base polymer, the inability to create by mechanical blending disperse-phase domains that are small enough as not to interfere with the passage of light, and the adverse influence of the scavenging material on the crystallization behaviour of PET base resin. One approach to minimize such haze is the careful selection of base resin to improve dispersibility of the scavenger material and, thus, reduce, but not substantially eliminate, haze; and to minimize the adverse crystallization effect. This approach may restrict the choice of base polymer resin. Another approach is to use compositions that serve as compatibilizers to reduce haze. These approaches add cost to the barrier layer and the compatibilizer adds an additional material that must be evaluated for its suitability for contact with food. Thus, there is a need for improved plastic materials, which provide high oxygen scavenging capability and are substantially transparent.

Finally, the preferred thin walled container should be suitable for recycling with other polyester or polyolefin articles. In order to be meaningful, the recycling must be conducted without the need for any special physical processing such as delamination or the need for any special chemical processing such as depolymerization.

Summarising, a number of attempts have been made to prepare oxygen barrier and/or scavenging articles. There have been numerous approaches involving the use of laminated structures, and others involving the incorporation

of inorganic powders, salts and/or sacrificial oxidisable compounds. Most of these systems have at least one or several disadvantages including poor processing properties, insufficient oxygen uptake and long induction periods and most of them also suffer from poor clarity and lack of recyclability.

A need exist for improved gas barrier compositions, methods for the production of said compositions and methods of using the compositions in packaging articles that satisfy all the demands as recited above, specifically the need for transparent, recyclable, thin walled articles and containers with excellent oxygen scavenging capabilities.

In particular, it would be desirable to obtain improved gas barrier polyester compositions that can be injection stretch blow molded as monolayer containers with reduced haze. This is particularly required for containers that require a long shelf life, such as beer and other oxygen sensitive materials.

Surprisingly, it has been found that the object of the invention can be achieved by using particular additives as oxygen scavengers in certain plastic materials as specified hereinafter.

Therefore, the present invention provides for the use of an additive as oxygen scavenger in a plastic material, wherein

(a) the plastic material is a polyester, a polyolefin, a polyolefin copolymer or a polystyrene, and
the additive is (b) and optionally (c):
(b) a compound of formula (I), (1), (2), (5), (8), (9) and/or (10)

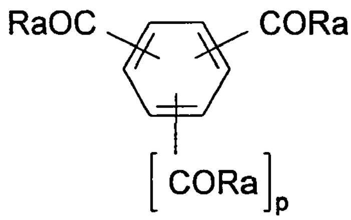

(I)

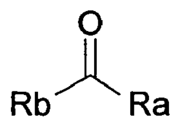

Formula (1)

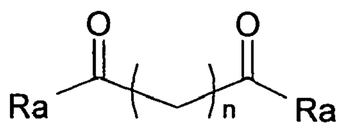

Formula (2)

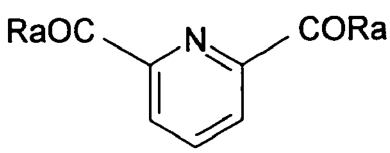

Formula (5)

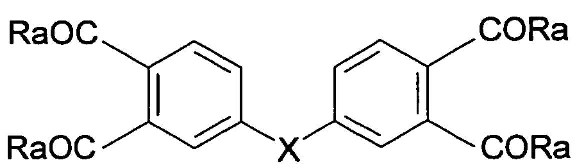

Formula (8)

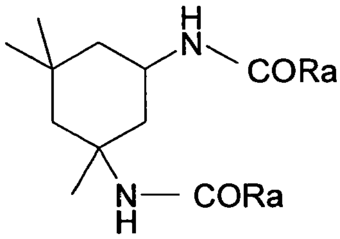

Formula (9)

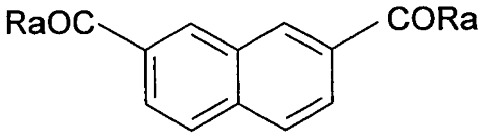

Formula (10)

where
each Ra can be the same or different and independently represents a group selected from the moieties of formula (A), (B) and (C),

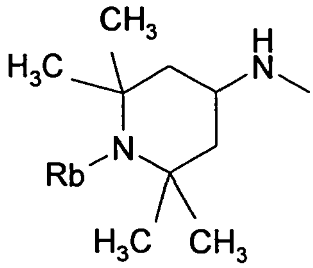

Formula (A)

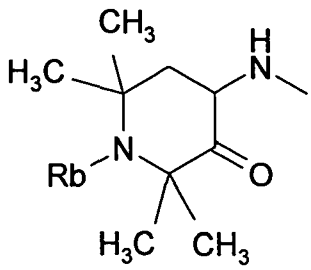

Formula (B)

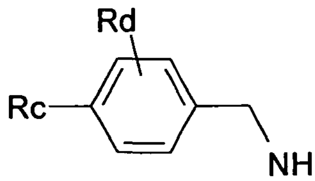

Formula (C)

wherein Rb is selected from hydrogen, $C_{1-6}$ alkyl, $C_{1-6}$ alkoxy and -CO-$C_{1-4}$ alkyl;
Rc is hydrogen or $C_{1-30}$ alkyl; Rd is hydrogen or $C_{1-30}$ alkyl and can be on ortho (o) or meta (m) position to Rc ;
p is the number 0, 1 or 2;
X in formula (8) is selected from $C(CH_3)_2$, S=O, C=O, $SO_2$ ;
n is a number from 1 to 20;
(c) a transition metal catalyst.

Expediently, the plastic material is or is part of a packaging article, or is a masterbatch MB or a Compound CO which can be processed into a packaging material.

Oxygen scavenging, in the sense of the present invention, refers to the reduction or elimination of unwanted oxygen from the packaging cavity by providing a substance that reacts with, absorbs and/or consumes oxygen. This is known as an active oxygen barrier and differs from the passive oxygen barriers, which attempt to hermetically seal a product away from oxygen.

Preferably, the additive (b) is used in an amount of from 0.001 to 5%, more preferably 0.01 to 1.5 %, most preferably 0.05 to 1 %, by weight, based on the total weight of the plastic material of the packaging article and the additive(s).

The transition metal catalyst c) is used in an amount of from 0 to 1%, preferably 0.001 to 1%, more preferably 0.01 to 0.5%, by weight, based on the total weight of the plastic material of the packaging article and the additive(s).

The present invention further provides for a method of providing an active oxygen barrier in a plastic material of a packaging article comprising incorporating an effective amount of an additive b) and optionally c) as specified above into a plastic material which is a polyester, a polyolefin, a polyolefin copolymer or a polystyrene.

The present invention further provides for a composition Z comprising the components A, B, and C,

the component A being a plastic material selected from the group consisting of polyesters, polyolefins, a polyolefin copolymers and polystyrenes;

the component B being an additive selected from the compounds represented by the formula (I), (1), (2), (5), (8), (9) and/or (10)

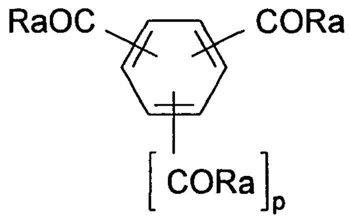

(I)

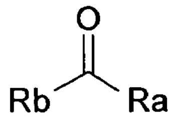

Formula (1)

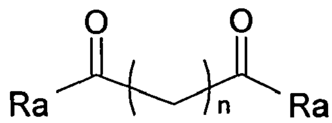

Formula (2)

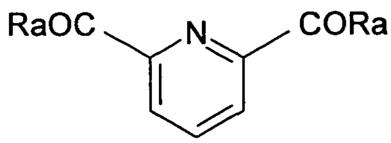

Formula (5)

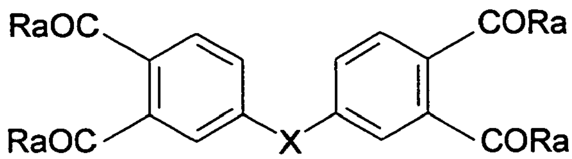

Formula (8)

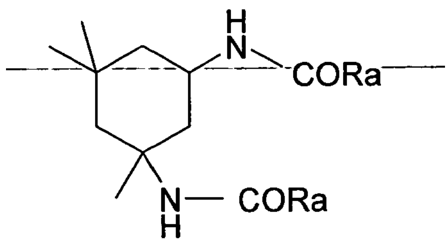

Formula (9)

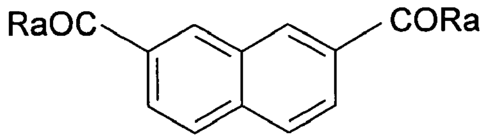

Formula (10)

where

each Ra can be the same or different and independently represents a group selected from the moieties of formula (A), (B) and (C),

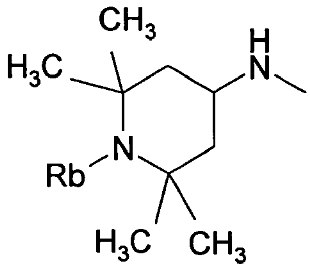

Formula (A)

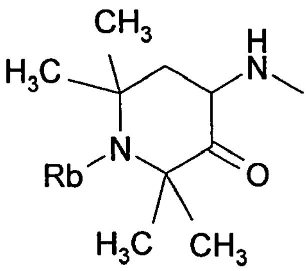

Formula (B)

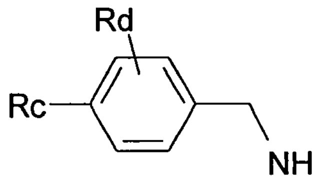

Formula (C)

wherein Rb is selected from hydrogen, $C_{1-6}$ alkyl, $C_{1-6}$ alkoxy and -CO-$C_{1-4}$ alkyl;
Rc is hydrogen or $C_{1-30}$ alkyl;
Rd is hydrogen or $C_{1-30}$ alkyl and can be on ortho (o) or meta (m) position to Rc ;
p is the number 0, 1 or 2;
X in formula (8) is selected from $C(CH_3)_2$, S=O, C=O, $SO_2$ ;
n is a number of from 1 to 20;
and
the component C being a transition metal catalyst.

Preferred plastic materials, i.e. component A or plastic material a) within the meaning of the invention, are polyesters.

The polyesters of the present invention are thermoplastic. The intrinsic viscosity values of the polyesters are set forth in dUg units as calculated from the inherent viscosity measured at 25°C in 60/40 wt/wt phenol/tetrachloroethane. The intrinsic viscosity of the polyesters preferably ranges from about 0.55 to about 1.14 dUg. Preferred polyesters are the ones resulting from the condensation reaction of dibasic acids and glycols.

Typically, the dibasic acid comprises an aromatic dibasic acid, or ester or anhydride thereof, and is selected from the group consisting of isophthalic acid, terephthalic acid, naphthalene-1 ,4-dicarboxylic acid, naphthalene-2,6,-dicarboxylic acid, phthalic acid, phthalic anhydride, tetrahydrophthalic anhydride, trimellitic anhydride, diphenoxyethane-4,4'-dicarboxylic acid, diphenyl-4,4'-dicarboxylic acid, and mixtures thereof. The dibasic acid also can be an aliphatic dibasic acid or anhydride, such as adipic acid, sebacic acid, decan-1,10-dicarboxylic acid, fumaric acid, succinic anhydride, succinic acid, cyclohexanediacetic acid, glutaric acid, azeleic acid, and mixtures thereof. Other aromatic and aliphatic dibasic acids known to persons skilled in the art also can be used. More preferably, the dibasic acid comprises an aromatic dibasic acid, optionally further comprising up to about 20 % by weight of the dibasic acid component, of an aliphatic dibasic acid.

Preferably, the glycol or diol component of the polyester is selected from the group consisting of ethylene glycol, propylene glycol, butane-1,4-diol, diethylene glycol, a polyethylene glycol, a polypropylene glycol, neopentyl glycol, a polytetramethylene glycol, 1,6-hexylene glycol, pentane-1,5-diol, 3-methylpentanediol-(2,4), 2-methylpentanediol-(1,4), 2,2,4-trimethylpentane-diol-(1,3), 2-ethylhexanediol-(1,3),2,2-diethylpropanediol-(1,3), hexanediol-(1,3), 1,4-di-(hydroxy-ethoxy) benzene, 2,2-bis-(4-hydroxycyclohexyl) propane, 2,4-dihydroxy-1,1,3,3-tetramethylcyclobutane, 2,2-bis-(3-hydroxyethoxyphenyl) propane, 2,2-bis-(4-hydroxypropoxyphenyl) propane, 1,4-dihydroxymethyl-cyclohexane, and mixtures thereof. Additional glycols known to persons skilled in the art also can be used as the glycol component of the polyester.

Two preferred polyesters are polyethylene terephthalate (PET) and polyethylene naphthalate (PEN). The PET

and PEN can be homopolymers, or copolymers further containing up to 10 mole percent of a dibasic acid different from terephthalic acid or a naphthalene dicarboxylic acid, and/or up to 10 mole percent of a glycol different from ethylene glycol.

PEN is preferably selected from the group consisting of polyethylene naphthalene 2, 6-dicarboxylate, polyethylene naphthalene 1,4-dicarboxylate, polyethylene naphthalene 1,6-dicarboxylate, polyethylene naphthalene 1,8-dicarboxylate, and polyethylene naphthalene 2,3-dicarboxylate. More preferably, PEN is polyethylene naphthalene 2,3-dicarboxylate.

More preferably the plastic material is selected from the group consisting of PET, e.g. virgin bottle grade PET and postconsumer PET (PC-PET), cyclohexane dimethanol/PET copolymer (PETG), polyethylene naphthalate (PEN), polybutylene terephthalate (PBT), and mixtures thereof.

Also preferred plastic materials are biodegradable polyester, preferably selected from the group consisting of PLAs (Polylactic acid), polycaprolactones (PCL) and polyhydroxybutyrates (PHB).; and bio-based polyesters, which are derived from renewable resources such as corn and sugar cane and the by-products associated with their harvesting and processing but are not biodegradable.

Preferred polyolefins and polyolefin copolymers, i.e. component A or plastic material a) within the meaning of the invention, are thermoplastic polyolefins known in the art and are selected from the group consisting of

- polyethylene (PE), preferably selected from the group consisting of high density polyethylene (HDPE), medium density polyethylene (MDPE), low density polyethylene (LDPE), linear low density polyethylene (LLDPE), metallocene low density polyethylene (mLDPE) and metallocene linear low density polyethylene (mLLDPE),
- polypropylene (PP), preferably selected from the group consisting of polypropylene homopolymer (PPH), polypropylene random copolymer (PP-R) and polypropylene block copolymers (PP-block-COPO),
- PE copolymers, preferably selected from the group consisting of ethylene-vinyl acetate copolymers (EVA), copolymers of ethylene and methyl acrylate (EMA), copolymers of ethylene and butyl acrylate (EBA), copolymers of ethylene and ethyl acrylate (EEA), and cycloolefin copolymers (COC),
- general purpose polystyrene (GPPS) and high impact polystyrene (HIPS); more preferably of
- high density polyethylene (HDPE) and low density polyethylene (LDPE)
- polypropylene homopolymer (PPH),
- general purpose polystyrene (GPPS).

Preferred polystyrenes, i.e. component A or plastic material a) within the meaning of the invention, can be a styrene homopolymer, an alkylstyrene homopolymer, preferably a $C_1$-$C_4$-alkylstyrene homopolymer, for example $\alpha$-methylstyrene homopolymer; a styrene copolymer, especially a high impact polystyrene (HIPS). High impact polystyrenes (HIPS) are generally prepared by polymerization by grafting mixtures of styrene and optionally of one or more copolymerizable vinyl monomers, preferably mixtures of styrene, methylstyrene, ethylstyrene, butylstyrene, halostyrenes, vinylalkylbenzenes, such as vinyltoluene, vinylxylene, acrylonitrile, methacrylonitrile, lower alkyl esters of methacrylic acid, in the presence of a rubbery polymer trunk comprising copolymers chosen from polybutadiene, polyisoprene, rubbery styrene-diene copolymers, acrylic rubber, nitrile rubber and olefinic rubbers, such as propylene diene monomer rubber (PDM) and propylene rubber (PR). In the high impact polystyrene, the rubbery polymer trunk normally constitutes from 5 to 80 % by weight, preferably 5 to 50 % by weight, of the total weight of the grafted polymer.

The preferred density of component P is of from 1.0 to 1.1 g/cm$^3$, more preferably of from 1.02 to 1.06 g/cm$^3$, even more preferably of from 1.03 to 1.05 g/cm$^3$.

Preferred polystyrenes are polystyrenes with a MFR at 200 °C/5 kg according to ISO 1133 of from 0.1 to 300 g/10 min, more preferably of from 1 to 200 g/10 min, even more preferably of from 5 to 100 g/10 min, especially of from 10 to 50 g/10 min, more especially of from 15 to 35 g/10 min, in particular of from 20 to 25 g/10 min.

Preferred, component B or additive b) is any compound having a substructure resulting from a combination of a moiety represented by the above formulae (I) to (10) with a moiety Ra as represented by formulae (A) or (B) or (C).

Preferred embodiments of formula (I) are formulae

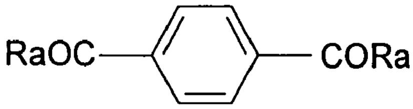

(3)

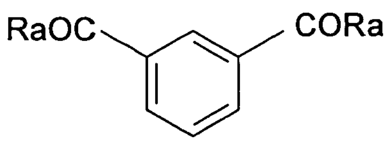

(4)

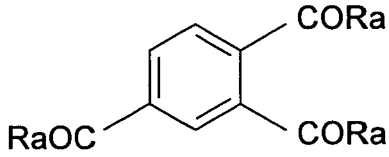

(6)

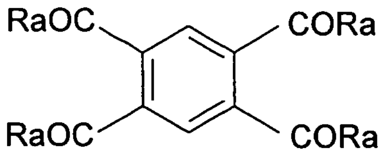

(7)

wherein each Ra also within one formula can be the same or different.

In the relation to said formulae (1) to (10), a $C_{1-6}$ alkyl group as represented by Rb is preferably a group selected from methyl, ethyl, n-propyl, i-propyl, n-butyl, i-butyl, sec-butyl, tert-butyl, n-pentyl, 1-methylbutyl, 2-methylbutyl, 3-methylbutyl, 1,1-dimethylpropyl, 1,2-dimethylpropyl, 2,2-dimethylpropyl, n-hexyl, 1-methylpentyl, 2-methylpentyl, 3-methylpentyl, 4-methylpentyl, 1,1-dimethylbutyl, 1,2-dimethylbutyl, 1,3-dimethylbutyl, 2,3-dimethylbutyl, 2,2-dimethylbutyl, 3,3-dimethylbutyl, 1-ethylbutyl, 2-ethylbutyl, 1-ethyl-2-methylpropyl, 1,1,2-trimethylpropyl, and 1,2,2-trimethylpropyl.

A $C_{1-6}$ alkoxy group as represented by Rb is preferably a $C_{1-6}$ alkyl group as described hereinabove that is linked to the nitrogen atom of the moiety represented by $R^a$ by means of an oxygen atom.

A -CO-$C_{1-4}$ alkyl group as represented by Rb is preferably a $C_{1-4}$ alkyl group as described hereinabove that is linked to the nitrogen atom of the moiety represented by Ra by means of a -CO- group.

In a preferred embodiment of the present invention, the additive b) or component B is a compound containing the substructure represented by above formula (3) or (4), wherein Ra independently is a moiety selected from above formula (A), (B) or (C), wherein Rb is selected from hydrogen, methyl, ethyl, methyl-CO-, and ethyl-CO-.

In a more preferred embodiment, the additive b) or component B is a compound containing the substructure represented by above formula (4), wherein both Ra are a moiety represented by above formula (A), wherein Rb is selected from hydrogen, methyl, ethyl, methyl-CO-, and ethyl-CO-.

A particularly preferred additive b) or component B is a compound containing the substructure represented by the above formula (4), wherein both Ra are a moiety represented by the above formula (A), wherein Rb is hydrogen, i.e. N,N'-bis(2,2,6,6-tetramethyl-4-piperidyl)-1,3-benzenedicarboxamide (formula 4a) or a mixture of formula (4a) and formula (4b).

Said additive of formula (4b) is available under the trade name Nylostab®-SEED® from Clariant.

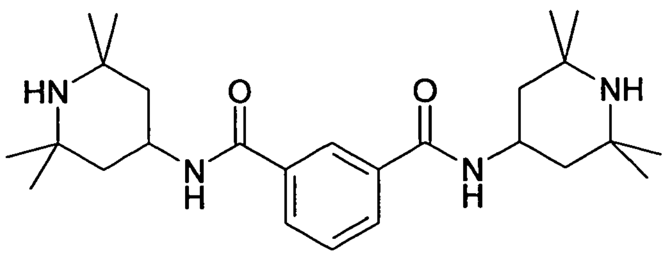

Formula (4a)

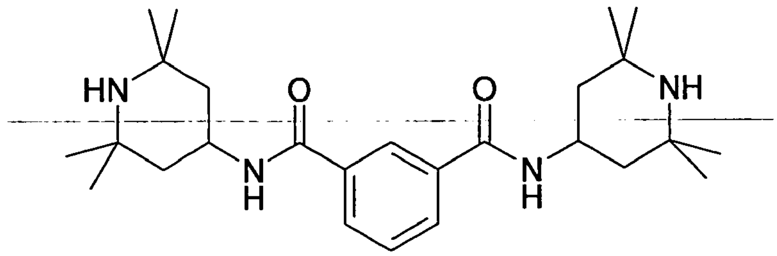

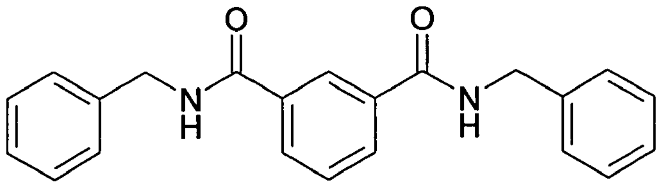

Formula (4b)

Additive c) or component C, within the meaning of the invention, is a transition metal catalyst that initiate and accelerates the rate of oxygen scavenging. The mechanism by which this transition metal functions is not certain. The catalyst may or may not be consumed in the oxygen scavenging reaction, or if consumed, may only be consumed temporarily by converting back to a catalytically active state.

More preferably, the transition metal catalyst is in the form of a salt, with the transition metal selected from the first, second or third transition series of the Periodic Table. Suitable metals and their oxidation states include, but are not limited to, manganese II or III, iron II or III, cobalt II or III, nickel II or III, copper I or II, rhodium II, III or IV, and ruthenium. The oxidation state of the metal when introduced does not need necessarily to be that of the active form. The metal is preferably iron, nickel, manganese, cobalt or copper; more preferably manganese or cobalt; and even more preferably cobalt. Suitable counterions for the metal include, but are not limited to, chloride, acetate, propionate, oleate, stearate, palmitate, 2-ethylhexanoate, neodecanoate or naphthenate.

The metal salt can also be an ionomer, in which case a polymeric counterion is employed. Such ionomers are well known in the art.

Even more preferably, the salt, the transition metal, and the counterion are either compliant with country regulations in the matter of food contact materials or, if part of a packaging article, exhibit substantially no migration from the oxygen scavenging composition to the packaged contents. Particularly preferable salts include cobalt oleate, cobalt propionate, cobalt stearate, and cobalt neodecanoate.

Optionally, composition Z comprises one or more further substances (component D), which are selected from the group consisting of aliphatic polyamides and partially aromatic polyamides.

The aliphatic polyamides are fully aliphatic polyamides and include a moiety $-CO(CH_2)_nCONH(CH_2)_mNH-$ or a moiety $-(CH_2)_pCONH-$, wherein n, m and p are integers independently from each other in the range of 1 to 10, preferably of 4 to 6.

Preferably, aliphatic polyamides include poly (hexamethylene adipamide), poly (caprolactam) and poly (hexamethylene adipamide)-co-caprolactam.

Especially, the aliphatic polyamide is poly (hexamethylene adipamide)-co-caprolactam.

"Partially aromatic polyamide" within the meaning of the invention are polymerized from a mixture of aromatic and non-aromatic monomers or precursors. Preferably, the partially aromatic polyamides are selected from the group consisting of polyamides formed from isophthalic acid, terephthalic acid, cyclohexanedicarboxylic acid, aliphatic diacids with 6 to 12 carbon atoms together with meta- or para-xylene diamine, 1,3- or 1,4-cyclohexane(bis)methylamine, aliphatic diamines with 4 to 12 carbon atoms, or aliphatic amino acids with 6 to 12 carbon atoms, or from lactams with 6 to 12 carbon atoms, in all possible combinations, and from other generally known polyamide forming diacids and diamines. The partially aromatic polyamides may also contain small amounts of trifunctional or tetrafunctional comonomers such as trimellitic anhydride, pyromellitic dianhydride, or other polyamide forming polyacids and polyamines known in the art.

More preferably, partially aromatic polyamides are selected from the group consisting of poly(m-xylylene adipamide), poly (hexamethylene isophthalamide), poly (hexamethylene adipamide-co-isophthalamide), poly(hexamethylene adipamide-co-terephthalamide) and poly(hexamethylene isophthalamide-co-terephthalamide). Even more preferably, the

polyamide is poly(m-xylylene adipamide).

Molecular weight Mn of the polyamides is desirably between 1000 and 45000, preferably between 2500 and 25000.

Optionally, composition Z comprises also one or more further substances (component E), which are selected from the group consisting of natural colorants derived from plants or animals and synthetic colorants, preferred synthetic colorants being synthetic organic and inorganic dyes and pigments,

- preferred synthetic organic pigments being azo or disazo pigments, laked azo or disazo pigments or polycyclic pigments, particularly preferably phthalocyanine, diketopyrrolopyrrole, quinacridone, perylene, dioxazine, anthraquinone, thioindigo, diaryl or quinophthalone pigments;
- preferred synthetic inorganic pigments being metal oxides, mixed oxides, aluminium sulphates, chromates, metal powders, pearlescent pigments (mica), luminescent colours, titanium oxides, cadmium lead pigments, iron oxides, carbon black, silicates, nickel titanates, cobalt pigments or chromium oxides;
- fillers and nanosized fillers, preferably silica, zeolites, silicates, particularly preferably aluminium silicates, sodium silicate, calcium silicates; chalk or talc; metal hydrates;
- auxiliaries, preferably acid scavengers, processing aids, coupling agents, lubricants, stearates, blowing agents, polyhydric alcohols, nucleating agents, or antioxidants, e.g. stearates, or oxides such as magnesium oxide;
- antioxidants, preferably primary or secondary antioxidants;
- antistatic agents;
- compatibilizers for polyester/polyamide blends;

UV absorbers, slip agents, anti-fogging agents, anti-condensation agents, suspension stabilizers, anti-blocking agents, waxes, and a mixture of these substances.

More preferably, component E is selected from the group consisting of compatibilizers for polyester-polyamide blends, if the plastic material is a polyester, UV absorbers, antioxidants and colorants.

Preferred compatibilizers include, but are not limited to, polyester ionomers, preferably PEI ionomers, isophthalic acid (IPA) modified PET, p-toluene sulfonic acid (pTSA) modified PET, pyromelittic dianhydride (PMDA) modified PET, and maleic anhydride modified PET. Other preferred compatibilizers include acrylic modified polyolefin type ionomer and low molecular weight bisphenol-A epoxy resin-E44 which may be added directly to a PET/polyamide blend. Further, trimellitic anhydride (TMA) may be added to the polyamide, transesterified, mixed with PET and then coupled using a bifunctional coupler such as, but not limited to, diphenylmethane-4, 4-diisocyanate (MDI), diphenylmethane-4, 4-diisopropylurethane (DU), or bisoxazoline (BOX). When compatibilizers are used, preferably one or more properties of the polyamide/polyester blends are improved, such properties including color, haze, and adhesion between a layer comprising a blend and a layer comprising polyester.

Preferred polyester ionomers include those disclosed in US 6500895 B1. Preferred PET ionomers include sulfonated PET. A preferred modified PET-type compatibilizer is IPA modified PET.

Preferably, the composition Z contains
of from 14 to 99.887 % by weight of component A;
of from 0.01 to 70 % by weight of component B;
of from 0.003 to 15 % by weight of component C;
of from 0 to 80 % by weight of components D and/or E;
with the % by weight being based in each case on the total weight of the composition Z; and with the weight percent of the components A, B, C and optionally D and E always adding up to 100 %.

The composition Z can be a masterbatch MB or a compound CO. The composition Z can be liquid or solid at ambient temperature.

Preferably, in case the composition Z is a masterbatch MB, the composition Z comprises
of from 14 to 94 % by weight of component A;
of from 5 to 70 % by weight of component B;
of from 1 to 15 % by weight of component C;
of from 0 to 80% by weight of one or more further-substances, preferably of components D and/or E;
more preferably
of from 14 to 94 % by weight of component A;
of from 5 to 50 % by weight of component B;
of from 1 to 10 % by weight of component C;
of from 0 to 80 % by weight of components D and/or E;
with the % by weight being based in each case on the total weight of the composition Z; and with the weight percent of the components A, B, C and optionally D and E always adding up to 100 %.

Preferably, in case the composition Z is a compound CO, the composition Z comprises

of from 88 to 99.887 % by weight of component A;
of from 0.01 to 1.5 % by weight of component B;
of from 0.003 to 0.5 % by weight of component C;
of from 0 to 10 % by weight of one or more further substances, preferably of components D and/or E;
more preferably
of from 90 to 99.86 % by weight of component A;
of from 0.1 to 0.8 % by weight of component B;
of from 0.04 to 0.3 % by weight of component C;
of from 0 to 8.9 % by weight of f components D and/or E;
with the % by weight being based in each case on the total weight of the composition Z; and with the weight percent of the components A, B, C and optionally D and E always adding up to 100 %.

The present invention further provides for a composition Z consisting of components A, B, C, and optionally D and/or E, with the components A to E and the amounts and preferred amounts of components A to E as described in the foregoing.

The composition Z of the present invention is expediently formed, e.g. blow molded, into a plastic article. Therefore, another subject of the present invention is a formed plastic article comprising said composition Z.

The formed plastic article according to the invention can be a packaging material, preferably
a container, a film or a sheet, especially for use in packaging of personal care, cosmetics, medical, pharmaceutical, household, industrial, food and beverage products where a high oxygen barrier is needed.
Packaging materials suitable for comprising oxygen scavenging composition Z can be flexible, rigid, semi-rigid or combinations thereof.
Rigid packaging articles typically have wall thicknesses in the range of 100 to 1000 micrometers. Typical flexible packages typically have thicknesses of 5 to 250 micrometers.

Rigid packaging articles or flexible films comprising oxygen scavenging compositions of the invention can consist of a single layer or may comprise multiple layers. When a packaging article or film comprises an oxygen scavenging layer, it can further comprise one or more additional layers, one or more of the additional layers comprising an oxygen barrier layer or being permeable to oxygen. Further additional layers, such as adhesive layers, can also be used in a multi-layer packaging article or film.
Preferably, the rigid containers, e.g. bottles, or flexible films in which composition Z is used to scavenge oxygen, are monolayer.

Another subject of the invention is a method for the manufacture of a plastic material or an article as defined above, characterised in that the components A, B, C, and optionally D and E, are physically mixed with one another and subjected to a shape forming process.

For physical mixing, it is possible to use a mixing apparatus customary in the plastics industry. Preferably, the mixing apparatus can be one used to make a liquid masterbatch or a solid masterbatch or can be a combination of those apparatuses. A mixing apparatus for a liquid masterbatch can be a high speed dispersor (e.g. of Cowles™ type), a media mill, a three-roll mill, a submill or a rotor-stator type dispersor.
A mixing apparatus used to make solid masterbatches MB or compounds CO can be a mixer, extruder, kneader, press, mill, calender, blender, injection moulding machine, injection and stretch blow moulding machine (ISBM), extrusion blow moulding machine (EBM), compression moulding machine, compression and stretch blow moulding machine; more preferably a mixer, extruder, injection moulding machine, injection and stretch blow moulding machine, compression moulding machine, compression and stretch blow moulding machine; even more preferably a mixer, extruder, injection and stretch blow moulding machine and extrusion blow moulding machine.

The shape forming process for the article is dependent on the desired shape of article to be manufactured. Containers are preferably made by blow moulding, injection moulding, injection and stretch blow moulding, extrusion blow moulding, compression moulding, compression and stretch blow moulding processes.
Films and sheets are preferably made by cast or blown film extrusion or co-extrusion processes, depending on the thickness required and on the number of layers needed to obtain specific properties, eventually followed by post-extrusion shaping processes like thermoforming or stretching. In the thermoforming process, the plastic sheet is heated to a pliable forming temperature, formed to a specific shape in a mold, and trimmed to create a final article. If vacuum is used, this process is generally called vacuum forming. In post-extrusion stretching processes an extruded film can be, for example, biaxially oriented by drawing. All the above listed processes are well-known in the art.

For compositions Z comprising more than one masterbatch or components, extruders may be equipped with a metering system for introducing said components and/or masterbatches into the main stream polymer. This metering may be carried out directly with one or more pure components or with one or more masterbatches.
The type of metering equipment used depends on the form in which the pure component or the masterbatch is metered. In the case of solid component, a metering device of the feed screw type is usually employed and the point of introduction may be the main inlet of the extruder jointly with the feed of the main polymer granules, or in an unpressurized injection

zone located along the extruder. For a solid masterbatch, the metering device may be a system comprising an additional extruder that pre-melts the masterbatch, pressurizes it and meters it by means of a metering pump, the amount of masterbatch metered being fed at a point along the main extruder advantageously without pressure.
For a liquid pure component or a liquid masterbatch, the metering device may be a system comprising one or more metering pumps which introduce the liquid masterbatch at the main inlet of the extruder jointly with the feed with the main polymer granules, without any pressure, or at a point under pressure located along the extruder.

The mixing of the components forming composition Z can occur in one step, two steps or in a plurality of steps. Mixing can occur in one step when the components A, B, C, and optionally components D and E, are directly metered and/or let down in a form of liquid or solid concentrates or as pure components, for example in an injection and stretch blow molding machine.
The mixing can also occur in two or three steps, wherein in a first step components B, C and optionally E are predispersed into component A, and in one or more consecutive steps are added to component A and optionally component D.
Preferably, component B and component C are predispersed into component A to form two separate masterbatches, and then these masterbatches are combined with components A and optionally D. For either two or three step mixing process, it is most preferred that the addition of component D occurs in the last step.

In one preferred embodiment of the invention, in a first step, component B and optionally component E are dispersed into component A while component C is dispersed into component A to provide two separate masterbatches. After being melt compounded, for example in a single or twin screw extruder, the extrudates are withdrawn in strand form, and recovered as pellets according to the usual way, such as cutting. In a second step, the obtained masterbatches are metered and let down by a converter/compounder into the main stream of component A pellets and optionally component D pellets, one or both optionally ground, or into the main stream of a concentrate of compound D into compound A, for example in an injection and stretch blow molding machine.

In another embodiment of the invention, in a first step, component B, C and optionally components D and E are dispersed into component A to provide a masterbatch. After being melt compounded, for example in a single or twin screw extruder, the extrudate is withdrawn in strand form, and recovered as pellets according to the usual way such as cutting. In a second step, the obtained solid masterbatch is metered and let down by a converter/compounder into the main stream of component A of e.g. an injection and stretch blow molding machine, at a rate corresponding to the final desired concentration of component B, C and D in the article and without the step of separately metering component D.

Mixing preferably occurs continuously or batchwise, more preferably continuously; in case of a solid masterbatch MB preferably by extrusion, mixing, milling or calendering, more preferably by extrusion; in case of a liquid masterbatch MB preferably by mixing or milling; in case of a compound CO preferably by extrusion or calendaring, more preferably by extrusion.

Mixing is preferably carried out at a temperature of from 0 to 330 °C.
The mixing time is preferably of from 5 sec to 36 h, preferably 5 sec to 24 h.
The mixing time in the case of continuous mixing is preferably of from 5 sec to 1 h.
The mixing time in the case of batchwise mixing is preferably of from 1 sec to 36 h.
In the case of a liquid masterbatch MB, mixing is preferably carried at a temperature of from 0 to 150 °C with a mixing time of from 0.5 minutes to 60 minutes.
In the case of a solid masterbatch MB or a compound CO, mixing is preferably carried out at a temperature of from 80 to 330 °C with a mixing time of from 5 sec to 1 h.

In another embodiment, the compositions described herein are used as a component of a wall that is used in a package article for oxygen sensitive materials. The wall may be a rigid one, such as in a container or bottle or a flexible one such as in films. It may be homogenous or a laminated or coated with other polymers. If it is laminated or coated, then the scavenging property may reside in one or more layers of the wall.

Specific articles of the present invention include preforms, containers, films and sheets for packaging of food, beverages, cosmetics, pharmaceuticals, and personal care products where a high oxygen barrier is needed. Examples of beverage containers are: bottles for juices, sport drinks, beer or any other beverage where oxygen detrimentally affects the flavour, fragrance, performance (prevent vitamin degradation), or colour of the drink. The compositions of the present invention are also particularly useful as a sheet for thermoforming into rigid packages and films for flexible structures. Rigid packages include food trays and lids. Examples of food tray applications include dual ovenable food trays, or cold storage food trays, both in the base container and in the lidding (whether a thermoformed lid or a film), where the freshness of the food contents can decay with the ingress of oxygen. The compositions of the present invention also find use in the manufacture of cosmetic containers and containers for pharmaceuticals or medical devices.

Preferred articles of the present invention are rigid packaging articles, such as bottles and thermoformed sheets and flexible films.

More preferred articles of the present invention are hollow containers which are expediently manufactured by any kind of blow moulding process known in the art. Blow molding of thermoplastic hollow containers is conventionally performed either by blow molding of an extruded thermoplastic polymeric parison (extrusion blow moulding - EBM) or

by blow molding of a thermoplastic polymeric preform, the latter is usually injection molded from a thermoplastic polymer (injection and stretch blow moulding - ISBM). The hot thermoplastic polymeric parison or the heated preform is received within a mold cavity whereupon pressurized gas provides the blow molding of the container to the shape of the mold cavity.

ISBM processes are generally divided into two main types. The first is a one-step process, in which the preform is molded, conditioned, and then transferred to the stretch blow molding operation before the preform has cooled below its softening temperature. The second type of ISBM process is a two-step process in which the preform is prepared ahead of time and stored for later use. In the two-step process, the preform is reheated prior to the initiation of the stretch blow molding step. The two-step process has the advantage of faster cycle times, as the stretch blow molding step does not depend on the slower injection molding operation to be completed. However, the two-step process presents the problem of reheating the preform to the stretch blow molding temperature. This is usually done using infrared heating, which provides radiant energy to the outside of the preform. It is sometimes difficult to heat the preform uniformly using this technique and unless done carefully, a large temperature gradient can exist from the outside of the preform to the centre. Conditions usually must be selected carefully to heat the interior of the preform to a suitable molding temperature without overheating the outside. The result is that the two-step process usually has a smaller operating window than the one-step process.

To determine the oxygen scavenging capabilities of the invention, the rate of oxygen scavenging can be calculated by measuring the time elapsed until the article has depleted a certain amount of oxygen from a sealed container. Another definition of acceptable oxygen scavenging is derived from testing actual packages.

The oxygen scavenging capacity of an article comprising the invention can be measured by determining the amount of oxygen consumed until the article becomes ineffective as a scavenger.

In actual use, the oxygen scavenging capacity requirement of the article will largely depend on three parameters of each application:

- the quantity of oxygen initially present in the package,
- the rate of oxygen entry into the package in the absence of the scavenging property, and
- the intended shelf life for the package.

The composition Z allows the use of transition metal-based polyester compositions as oxygen scavenging systems with significantly improved oxygen scavenging performance and greatly increased transparency of the final plastic articles. Another advantage of using an oxygen scavenging composition comprising the organic compound B, compared to the use of oxygen scavenging materials commonly used in polymeric articles, is due to the lower amount of material needed to achieve the same oxygen scavenging performance.

Test methods

The product properties are determined by the following methods, unless indicated otherwise:

Values of density are determined in accordance with ASTM D792 (g/$cm^3$).

Values of melt flow rate (MFR) are determined in accordance with ASTM D1238 (g/10 min at specified temperature and weight).

Measurement method for oxygen scavenging activity

In case of bottles:

For a typical carbonated beverage shelf-life test, a 500 ml bottle is (i) filled with deoxygenated water up to a headspace of 10 ml, inside a nitrogen circulation glove box where the oxygen level of the water inside the bottle was stabilized at a level well below 50 ppb, (ii) carbonated with $CO_2$ to a carbonation level of 2.8 volumes (i.e. the amount of gas dissolved in every $cm^3$ of water is of 2.8 $cm^3$) and then capped. Measurement of the oxygen level in the free headspace of the bottle is then carried out using a non-invasive oxygen measurement sensor and a Fibox® transmitter. Data are collected in parallel for at least two sample bottles of the same composition, at regular time intervals. For each sample bottle, the oxygen ingress at a certain time is calculated as the difference between the oxygen content measured at that time and the level of oxygen measured at time 0. The oxygen ingress is then averaged over the number of sample bottles measured for each composition and plotted against time.

In case of films:

A proprietary steel cell with an open surface of 20x20 $cm^2$ is used to simulate the conditions of a typical tray for food stuff. The cell is prepared within a nitrogen circulation glove box, covered by a barrier film and sealed at the edges via a steel frame. Measurement of the oxygen level in the free headspace of the cell is then carried out using a non-invasive oxygen measurement sensor and a Fibox® transmitter. Data are collected at regular time intervals. For each sample, the oxygen ingress at a certain time is calculated as the difference between the oxygen content measured at that time and the level of oxygen measured at time 0. The oxygen ingress is then plotted against time.

Haze measurement:

Values of haze are determined on the sidewall of stretch blow molded bottles in accordance with ASTM D1003, Procedure A (% of transmitted light which, in passing through a specimen, deviates from the incident beam by forward scattering)

$$\%Haze = (T_{diffuse} / T_{total}) * 100$$

where T = % transmission.
Bottles were manufactured as described below and the haze of the bottle walls was measured with a hazemeter haze-gard dual (BYK Gardner). D65 illuminant was used with a CIE 1964 10° standard observer. The haze is defined as the percent of the CIE Y diffuse transmittance to the CIE Y total transmission.

Examples

% by weight mentioned in the following examples are based on the total weight of the mixture, composition or article; parts are parts by weight;
"ex" means example; "cpex" means comparative example; MB means masterbatch; CO means compound; unless indicated otherwise.

Substances used

Component A1:

Polyethylene terephthalate (PET) having a density from 1.35 to 1.45 g/$cm^3$ and intrinsic viscosity from 0.74 to 0.78 dl/g (ASTM D3236-88).

Component A2:

Polybutylene terephthalate (PBT) having a density from 1.28 to 1.32 g/$cm^3$ and intrinsic viscosity from 0.90 to 1.00 dl/g (ASTM D3236-88).

Component A3:

Low density polyethylene (LDPE) having a density of 0.92 g/cm3 (ISO 1183) and MFR of 7 g/10 min (ASTM D1238; measured at 190°C/2.16 kg).

Component A4:

High density polyethylene (HDPE) having a density of 0.94 g/$cm^3$ (ISO 1183) and MFR of 11 g/10 min (ISO 1133; measured at 190°C/2.16 kg).

Component B1:

Additive commercially available from Clariant as Nylostab® S-EED®.

Component C1:

Cobalt stearate (9.5 % Cobalt concentration).

Component D1:

Poly(m-xylylene adipamide) (MXD6) having a density from 1.20 to 1.30 g/cm$^3$ and MFR of 2 g/10 min (measured at 275 °C/0.325 kg).

Component D2:

Comparative product: Amosorb® 4020E polyester resin (ColorMatrix, US), which is a PET copolymer containing polybutadiene segments and a cobalt salt to give elemental cobalt level of 50 ppm.

Masterbatches MB1 and MB2

The components were homogenized together on a Leistritz® ZSE18HP extruder at the temperature of 230 °C to obtain solid masterbatches MB1 and MB2; Table 1 gives the details.

Table 1

| Masterbatches | Components used [parts] | | | |
|---|---|---|---|---|
| | A2 | B1 | C1 | D1 |
| MB1 (inventive) | 82 | 15 | 3 | |
| MB2 (comparative) | | | 8 | 92 |

ex1 and cpex1 to cpex3:

Component A1 was dried at 160 °C for 7 hrs and then the other components were homogenized and mixed in the ratios according to Table 2.

The obtained Compounds CO1 to CO4 were used to manufacture 500 ml bottles via a two-step ISBM process. 23 gram preforms were firstly prepared on an injection molding machine Arburg® 420C 1000-150 and then cooled to room temperature prior to the stretch blow molding step on a Sidel® SBO-1.

As an example of operational mode, preforms were obtained via injection molding by using the Arburg® 420C 1000-150 by inserting the component A1, pre-dried for 6 hours at 160 °C, into the main hopper of the machine, and by adding the other components (MB1 and MB2 and/or D1) through dosing units applied to the main stream of component A1 before entering the injection unit barrel. Barrel temperatures can be kept at temperatures between 270 and 295 °C; cycle time can vary between 14 and 16 seconds.

The weight of the preforms is chosen accordingly to the standard preforms found in the market, and can be set e.g. at 23 g per preform. The mould can be cooled by using water at e.g. 8 °C. Once extracted from the mould, preforms can be collected in order to be successively blown by using a Sidel® SBO-1 blow forming unit.

This unit, equipped e.g. with a mould for 500 ml (nominal capacity) bottle, comprises a heating zone where preforms are heated at temperatures variable with the design of the preform and of the final bottle; the final temperature of the preforms is kept between 105 and 110 °C; preforms are then inserted in the bottle moulds and blown by injecting dry air or nitrogen with a profile of pressure reaching 35-40 bar at its maximum, the blowing process requiring 2 to 3 seconds time.

The average production rate was 900 bottles per hour.

Blown bottles are then collected from the blowing unit for the necessary testing.

The oxygen scavenging activity corresponding to bottles, films and sheets prepared with compounds CO1 to CO4 as described above was then measured by following the methods described above. Table 3 reports the numerical data.

CO3 consists of a transition metal-based polyester/polyamide composition, prepared according to the state of the art and thus, not comprising component B. CO4 consists of a composition formulated with Amosorb® resin.

Table 2

| ex-cpex | Compounds | Components used [parts] | | | |
|---|---|---|---|---|---|
| | | A1 | MB1 | MB2 | D2 |
| cpex 1 | CO1 (virgin PET) | 100 | | | |
| ex1 | CO2 | 98 | 2 | | |
| cpex2 | CO3 | 95 | | 5 | |
| cpex3 | CO4 | 98 | | | 2 |

Total haze is the preferred method of measuring the clarity of polyester articles, which can determine its suitability for packaging application as clear barrier compositions. Haze was measured on polyester bottles obtained from compounds CO1 to CO4 as described above. Table 3 gives the details.
Composition CO2 of the present invention clearly show a significant improvement in clarity compared to the state-of-the-art compositions CO3 and CO4 not comprising component B. The level of clarity from inventive compositions is very similar to virgin PET, as in CO1.

Table 3

| Compounds | Haze (%) |
|---|---|
| CO1 | 1.5 |
| CO2 | 1.9 |
| CO3 | 9.5 |
| CO4 | 8 |

In table 4, the ingress of oxygen (in ppm) measured for compositions CO1 to CO4 is reported against the time elapsed from the filling of the container (measured in days). Difference between subsequent measurements is reported as Delta values, and the speed of ingress per day in the same period is reported as m, according to the formula

$$\text{Delta} = m \cdot \text{days}$$

For every composition the measurements have been interrupted when one of following conditions were met: end of the interesting period of desired shelf life (180 days), or oxygen content higher than 1.6 ppm (close to the upper accuracy limit of the measurement system).

The average value of m for every composition and observed period, defined as M, was then calculated. In order to evaluate the benefits coming from an efficient scavenging effect in combination with a low haze of the container, the parameter Y has been defined, where

$$Y = 1 / (M \cdot \text{Haze}^2)$$

Table 4

| Time [days] | Compounds | | | | | | | | | | | |
|---|---|---|---|---|---|---|---|---|---|---|---|---|
| | CO1 | | | CO2 | | | CO3 | | | CO4 | | |
| | ppm | Delta | m | ppm | Delta | m | ppm | Delta | m | ppm | Delta | m |
| 0 | 0 | | | 0 | | | 0 | | | 0 | | |
| 26 | 1.5 | 1.5 | 0.06 | 0.7 | 0.7 | 0.027 | 0.81 | 0.81 | 0.031 | 0 | 0 | 0 |
| 35 | 2 | 0.5 | 0.06 | 0.7 | 0 | 0.000 | 0.8 | -0.01 | -0.001 | 0.03 | 0.03 | 0.003 |
| 68 | | | | 0.76 | 0.06 | 0.002 | 1 | 0.2 | 0.006 | 0.65 | 0.62 | 0.019 |

(continued)

| | ppm | Delta | m | ppm | Delta | m | ppm | Delta | m | ppm | Delta | m |
|---|---|---|---|---|---|---|---|---|---|---|---|---|
| 89 | | | | 0.73 | -0.03 | -0.001 | 0.5 | -0.5 | -0.024 | 1.7 | 1.05 | 0.050 |
| 120 | | | | 0.65 | -0.08 | -0.003 | 0.24 | -0.26 | -0.008 | | | |
| 180 | | | | 0.6 | -0.05 | -0.001 | 0.08 | -0.16 | -0.003 | | | |

Table 5

| Parameter | Compound | | | |
|---|---|---|---|---|
| | CO1 | CO2 | CO3 | CO4 |
| M | 0.06 | 0.0040 | 0.00021 | 0.01803 |
| Haze (%) | 1.5 | 1.9 | 9.5 | 8 |
| Y | 7.41 | 69.5 | 53.6 | 0.867 |

**Claims**

**1.** Use of an additive as oxygen scavenger in a plastic material, wherein

(a) the plastic material is a polyester, a polyolefin, a polyolefin copolymer or a polystyrene, and the additive is (b) and optionally (c):
(b) a compound of formula (I), (1), (2), (5), (8), (9) and/or (10)

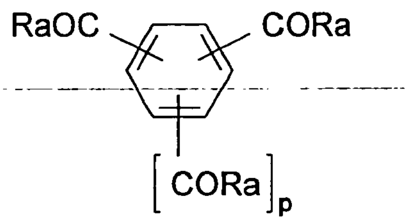

(I)

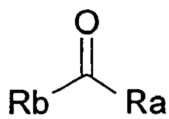

Formula (1)

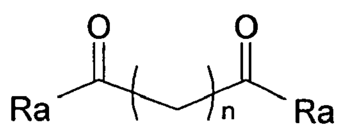

Formula (2)

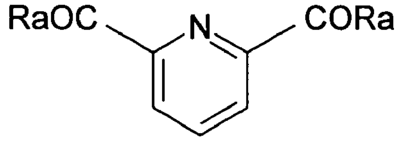

Formula (5)

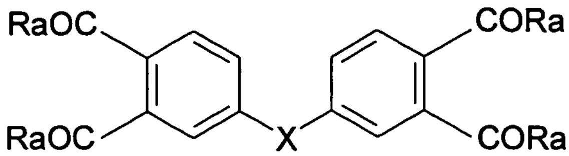

Formula (8)

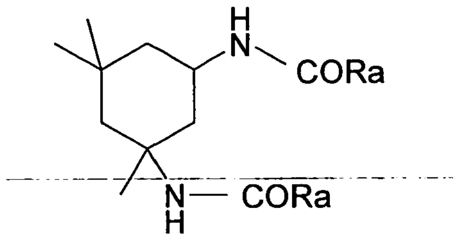

Formula (9)

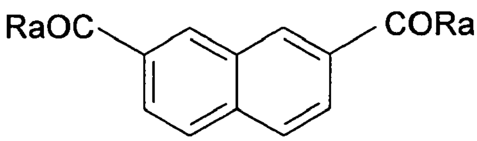

Formula (10)

where

each Ra can be the same or different and independently represents a group selected from the moieties of formula (A), (B) and (C),

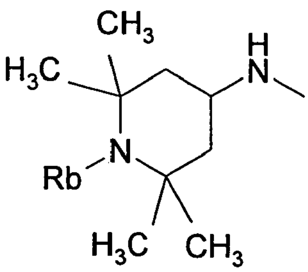

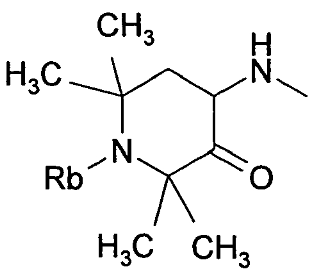

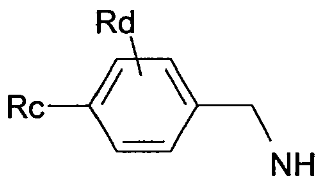

Formula (A) Formula (B) Formula (C)

wherein Rb is selected from hydrogen, $C_{1-6}$ alkyl, $C_{1-6}$ alkoxy and -CO-$C_{1-4}$ alkyl; Rc is hydrogen or $C_{1-30}$ alkyl; Rd is hydrogen or $C_{1-30}$ alkyl and can be on ortho (o) or meta (m) position to Rc ;

p is the number 0, 1 or 2;
X in formula (8) is selected from $C(CH_3)_2$, S=O, C=O, $SO_2$ ;
n is a number of from 1 to 20;
(c) a transition metal catalyst.

2. The use as claimed in claim 1, wherein the plastic material is or is part of a packaging article.

3. The use as claimed in claim 2, wherein the packaging article is a container, a sheet or a film.

4. The use as claimed in claim 2 or 3, wherein the additive b) is used in an amount of from 0.001 to 5 % by weight, based on the total weight of the plastic material and the additive.

5. The use as claimed in any of claims 1 to 4, wherein the compound of formula (I) is selected from the group consisting of formulae (3), (4), (6) and (7)

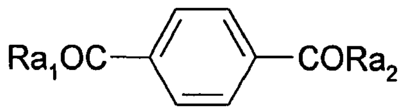
(3)

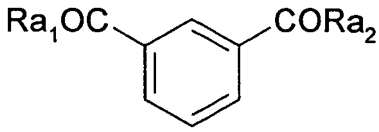
(4)

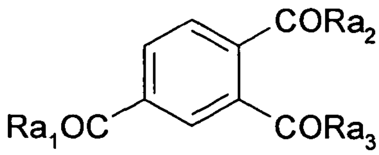
(6)

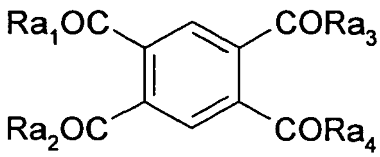
(7)

wherein each Ra is as defined in claim 1.

6. The use as claimed in any of claims 1 to 4 wherein aditive b) is a compound of formula (4a)

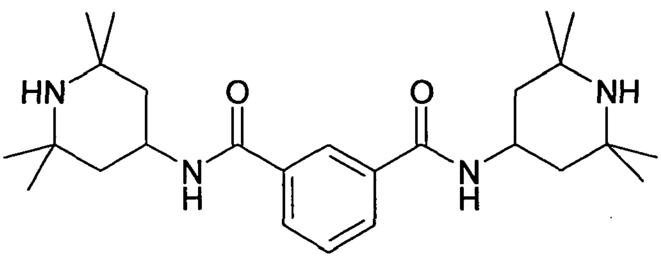
(4a)

or a mixture of the compounds of the following formulae

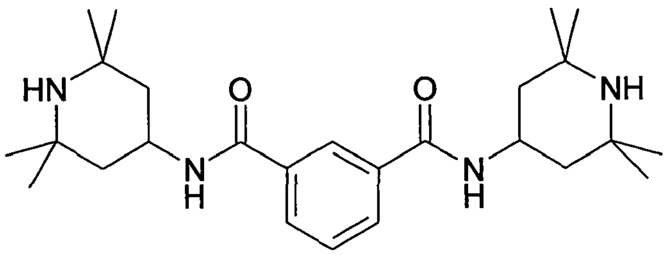

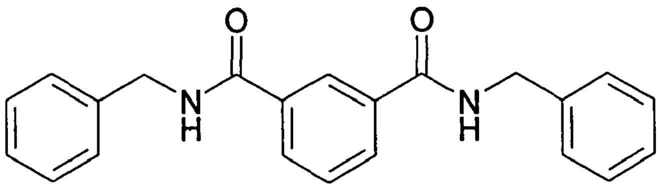

7. A composition Z comprising the components A, B, and C,
the component A being a plastic material selected from the group consisting of polyesters, polyolefins, a polyolefin copolymers and polystyrenes;
the component B being an additive selected from the compounds represented by the formula (I), (1), (2), (5), (8), (9) and/or (10)

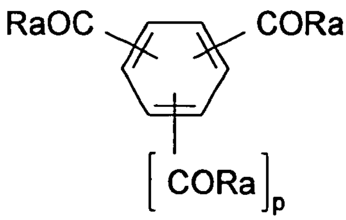

(I)

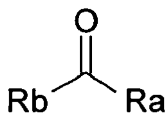

Formula (1)

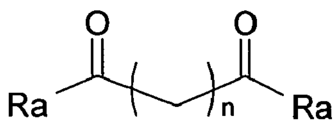

Formula (2)

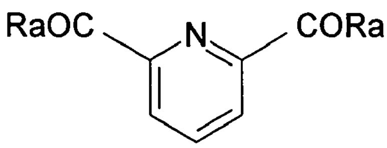

Formula (5)

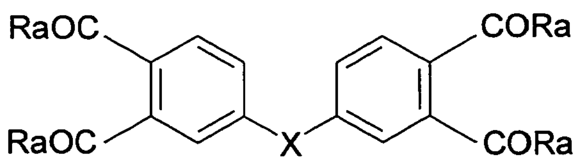

Formula (8)

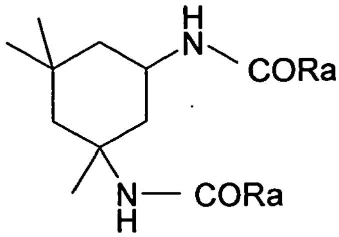

Formula (9)

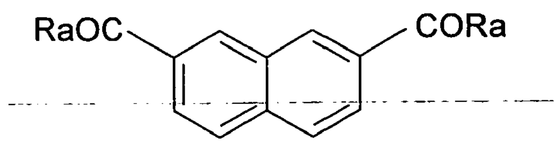

Formula (10)

where
each Ra can be the same or different and independently represents a group selected from the moieties of formula (A), (B) and (C),

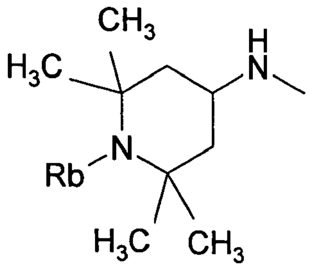

Formula (A)

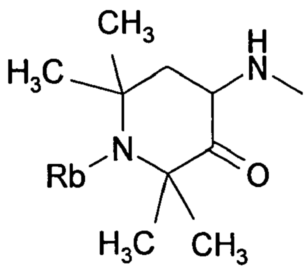

Formula (B)

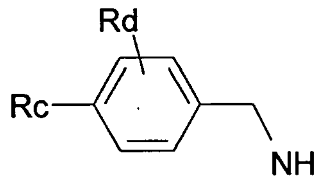

Formula (C)

wherein Rb is selected from hydrogen, $C_{1-6}$ alkyl, $C_{1-6}$ alkoxy and -CO-$C_{1-4}$ alkyl; Rc is hydrogen or $C_{1-30}$ alkyl; Rd is hydrogen or $C_{1-30}$ alkyl and can be on ortho (o) or meta (m) position to Rc ; p is the number 0, 1 or 2;
X in formula (8) is selected from $C(CH_3)_2$, S=O, C=O, $SO_2$ ;
n is a number of from 1 to 20;
and
the component C being a transition metal catalyst.

**8.** The composition as claimed in claim 7 containing
of from 14 to 99.887 % by weight of component A;
of from 0.01 to 70 % by weight of component B;
of from 0.003 to 15 % by weight of component C;

with the % by weight being based on the total weight of the composition Z; and with the weight percent of the components, B and C always adding up to 100 %.

**9.** The composition as claimed in claims 7 and 8, further comprising a component D which is selected from the group consisting of aliphatic polyamides and partially aromatic polyamides.

**10.** A composition Z consisting of components A, B, C and optionally component D and optionally component E, wherein components A, B, and C are as defined in claim 7,
component D is selected from the group consisting of aliphatic polyamides and partially aromatic polyamides, and component E is selected from the group consisting of
natural colorants derived from plants or animals, synthetic colorants, fillers,
acid scavengers, processing aids, coupling agents, lubricants, stearates, blowing agents, polyhydric alcohols, nucleating agents, antioxidants,
antistatic agents; compatibilizers for polyester/polyamide blends;
UV absorbers, slip agents, anti-fogging agents, anti-condensation agents, suspension stabilizers, anti-blocking agents, waxes, and a mixture of these substances.

**11.** The composition as claimed in claimed 10, consisting of
from 14 to 99.887 % by weight of component A;
from 0.01 to 70 % by weight of component B;
from 0.003 to 15 % by weight of component C;
from 0 to 80 % by weight of components D and/or E;
with the % by weight being based on the total weight of the composition Z; and with the weight percent of the components A, B, C, D, and E always adding up to 100 %.

**12.** The composition as claimed in any of claims 7 to 11, wherein the compound of formula (I) is selected from the group consisting of formulae (3), (4), (6) and (7)

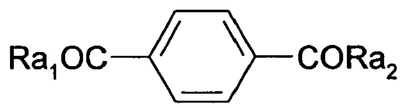
(3)

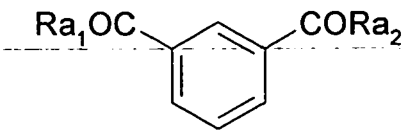
(4)

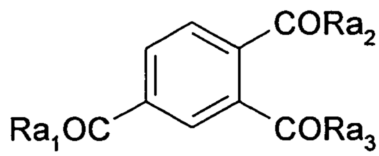
(6)

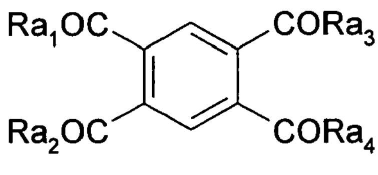
(7)

wherein each Ra is as defined in claim 1.

**13.** The composition as claimed in any of claims 7 to 12, wherein component B is a compound of formula (4a)

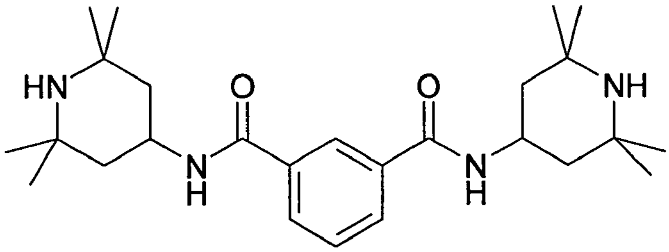

(4a)

or a mixture of compounds of the following formulae

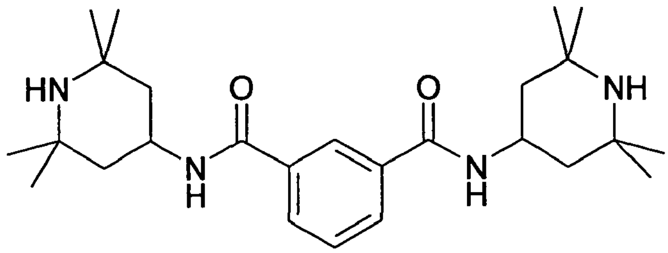

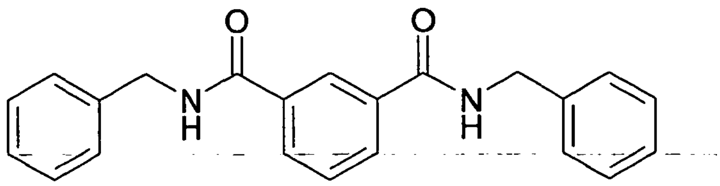

.

**14.** The composition Z as claimed in any of claims 7 to 13, wherein said composition Z is a masterbatch MB or a compound CO.

Europäisches Patentamt
European Patent Office
Office européen des brevets

# EUROPEAN SEARCH REPORT

Application Number
EP 12 00 6550

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br><br>A | US 2010/154361 A1 (DESHPANDE GIRISH NILKANTH [US] ET AL) 24 June 2010 (2010-06-24)<br>* claims 1,2,7-11; examples 1-5 *<br>* paragraph [0003] - paragraph [0152] *<br>* paragraph [0132] - paragraph [0137] * | 1-4, 7-11,14<br><br><br>5,6,12, 13 | INV.<br>C08K5/20<br>C08K5/3435 |
| X | US 2002/016390 A1 (GUGUMUS FRANCOIS [CH]) 7 February 2002 (2002-02-07)<br>* paragraphs [0001] - [0008], [0102] * | 7-14 | |
| A | GB 2 347 928 A (CIBA SC HOLDING AG [CH]) 20 September 2000 (2000-09-20)<br>* examples 1,6,23A,32,42 * | 7-12,14 | |
| A | EP 1 038 911 A1 (GRAND POLYMER CO LTD [JP]; HONDA MOTOR CO LTD [JP]) 27 September 2000 (2000-09-27)<br>* paragraph [0013] - paragraph [0025] * | 7-14 | |
| A | US 7 235 191 B2 (SCHMIDT HANS-WERNER [DE] ET AL) 26 June 2007 (2007-06-26)<br>* column 2, line 46 - column 3, line 35 *<br>* column 27; compounds I-31 * | 7-12,14 | TECHNICAL FIELDS SEARCHED (IPC)<br>C08K |

The present search report has been drawn up for all claims

| Place of search | Date of completion of the search | Examiner |
|---|---|---|
| The Hague | 27 March 2013 | Stinchcombe, John |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

2

EPO FORM 1503 03.82 (P04C01)

Europäisches Patentamt
European Patent Office
Office européen des brevets

Application Number

EP 12 00 6550

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches Patentamt
European Patent Office
Office européen des brevets

## LACK OF UNITY OF INVENTION SHEET B

Application Number
EP 12 00 6550

The Search Division considers that the present European patent application does not comply with the requirements of unity of invention and relates to several inventions or groups of inventions, namely:

1. claims: 6, 13(completely); 1-5, 7-12, 14(partially)

   Use of additive compound with piperidine substituent Ra of formula A as oxygen scavenger in plastics composition; composition comprising plastic material, the additive and a transition metal catalyst.

   ---

2. claims: 1-5, 7-12, 14(all partially)

   Use of additive compound with piperidinone substituent Ra of formula B as oxygen scavenger in plastics composition; composition comprising plastic material, the additive and a transition metal catalyst.

   ---

3. claims: 1-5, 7-12, 14(all partially)

   Use of additive compound with aniline substituent Ra of formula C as oxygen scavenger in plastics composition; composition comprising plastic material, the additive and a transition metal catalyst.

   ---

## ANNEX TO THE EUROPEAN SEARCH REPORT ON EUROPEAN PATENT APPLICATION NO. EP 12 00 6550

This annex lists the patent family members relating to the patent documents cited in the above-mentioned European search report.
The members are as contained in the European Patent Office EDP file on
The European Patent Office is in no way liable for these particulars which are merely given for the purpose of information.

27-03-2013

| Patent document cited in search report | Publication date | Patent family member(s) | Publication date |
|---|---|---|---|
| US 2010154361 A1 | 24-06-2010 | AU 2006214438 A1 | 24-08-2006 |
| | | BR PI0607159 A2 | 11-08-2009 |
| | | CA 2597918 A1 | 24-08-2006 |
| | | CN 101193976 A | 04-06-2008 |
| | | CN 102199337 A | 28-09-2011 |
| | | EP 1848659 A2 | 31-10-2007 |
| | | EP 2460855 A2 | 06-06-2012 |
| | | JP 2008530345 A | 07-08-2008 |
| | | KR 20070113228 A | 28-11-2007 |
| | | US 2006180790 A1 | 17-08-2006 |
| | | US 2009278087 A1 | 12-11-2009 |
| | | US 2010154361 A1 | 24-06-2010 |
| | | WO 2006088889 A2 | 24-08-2006 |
| | | ZA 200707146 A | 30-07-2008 |
| US 2002016390 A1 | 07-02-2002 | BE 1012828 A5 | 03-04-2001 |
| | | CA 2257043 A1 | 23-06-1999 |
| | | DE 19859194 A1 | 24-06-1999 |
| | | ES 2154577 A1 | 01-04-2001 |
| | | FR 2772774 A1 | 25-06-1999 |
| | | GB 2332677 A | 30-06-1999 |
| | | IT MI982777 A1 | 23-06-1999 |
| | | JP 4950371 B2 | 13-06-2012 |
| | | JP H11255956 A | 21-09-1999 |
| | | NL 1010891 A1 | 24-06-1999 |
| | | NL 1010891 C2 | 02-08-1999 |
| | | US 2002016390 A1 | 07-02-2002 |
| | | US 2003013785 A1 | 16-01-2003 |
| GB 2347928 A | 20-09-2000 | AR 028816 A1 | 28-05-2003 |
| | | AU 773104 B2 | 13-05-2004 |
| | | AU 1945400 A | 14-09-2000 |
| | | BE 1013530 A5 | 05-03-2002 |
| | | BR 0000666 A | 16-01-2001 |
| | | CA 2299754 A1 | 25-08-2000 |
| | | CN 1273241 A | 15-11-2000 |
| | | DE 10008367 A1 | 31-08-2000 |
| | | ES 2195674 A1 | 01-12-2003 |
| | | FR 2790259 A1 | 01-09-2000 |
| | | GB 2347928 A | 20-09-2000 |
| | | IT MI20000327 A1 | 23-08-2001 |
| | | JP 4757977 B2 | 24-08-2011 |
| | | JP 2000302758 A | 31-10-2000 |
| | | KR 20010014505 A | 26-02-2001 |
| | | MX PA00001961 A | 23-05-2002 |
| | | NL 1014414 A1 | 28-08-2000 |

EPO FORM P0459

For more details about this annex : see Official Journal of the European Patent Office, No. 12/82

## ANNEX TO THE EUROPEAN SEARCH REPORT ON EUROPEAN PATENT APPLICATION NO. EP 12 00 6550

This annex lists the patent family members relating to the patent documents cited in the above-mentioned European search report.
The members are as contained in the European Patent Office EDP file on
The European Patent Office is in no way liable for these particulars which are merely given for the purpose of information.

27-03-2013

| Patent document cited in search report | Publication date | Patent family member(s) | Publication date |
|---|---|---|---|
| | | NL 1014414 C2 | 17-07-2001 |
| | | RU 2243216 C2 | 27-12-2004 |
| | | TW 491876 B | 21-06-2002 |
| EP 1038911 A1 | 27-09-2000 | CA 2301310 A1 | 19-09-2000 |
| | | EP 1038911 A1 | 27-09-2000 |
| | | JP 2000273246 A | 03-10-2000 |
| US 7235191 B2 | 26-06-2007 | AR 034422 A1 | 25-02-2004 |
| | | AT 333490 T | 15-08-2006 |
| | | AU 2190002 A | 18-06-2002 |
| | | BR 0115946 A | 09-12-2003 |
| | | CA 2436960 A1 | 13-06-2002 |
| | | CN 1553931 A | 08-12-2004 |
| | | CZ 20031567 A3 | 17-09-2003 |
| | | DE 60121629 T2 | 30-11-2006 |
| | | DK 1366116 T3 | 06-11-2006 |
| | | EP 1366116 A2 | 03-12-2003 |
| | | ES 2267869 T3 | 16-03-2007 |
| | | IL 155902 A | 11-02-2007 |
| | | JP 4069251 B2 | 02-04-2008 |
| | | JP 4490469 B2 | 23-06-2010 |
| | | JP 2004515592 A | 27-05-2004 |
| | | JP 2008050617 A | 06-03-2008 |
| | | KR 20080007410 A | 18-01-2008 |
| | | MX PA03005053 A | 05-09-2003 |
| | | NO 20032514 A | 04-08-2003 |
| | | PT 1366116 E | 29-12-2006 |
| | | RU 2305687 C2 | 10-09-2007 |
| | | SK 6812003 A3 | 02-12-2003 |
| | | TW 585886 B | 01-05-2004 |
| | | US 2004063830 A1 | 01-04-2004 |
| | | US 2007170398 A1 | 26-07-2007 |
| | | WO 0246300 A2 | 13-06-2002 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 6346307 B
- US 6444283 B
- US 4957980 A
- US 5021515 A
- US 5639815 A
- US 5955527 A
- EP 1663630 B1
- US 5310497 A
- US 5211875 A
- US 5346644 A
- US 5350622 A
- US 6500895 B1